(19) Europäisches Patentamt
European Patent Office
Office européen des brevets

(11) Publication number: **0 165 723**
**A2**

(12) **EUROPEAN PATENT APPLICATION**

(21) Application number: 85303689.5

(22) Date of filing: 24.05.85

(51) Int. Cl.⁴: H 01 M 4/36
H 01 M 10/24

(30) Priority: 15.06.84 US 620932

(43) Date of publication of application:
27.12.85 Bulletin 85/52

(84) Designated Contracting States:
AT BE CH DE FR GB IT LI LU NL SE

(71) Applicant: OVONIC BATTERY COMPANY
1826 Northwood Drive
Troy Michigan 48084(US)

(72) Inventor: deNeufville, John Philip
R.D. 1 Indian Hollow Road
Mendham New Jersey, 07945(US)

(72) Inventor: Mani, Balaraman
5 Demond Place
Somerville New Jersey 08876(US)

(72) Inventor: Rajoria, Dalbir Singh
22 Holly Glen Apartment 52B
Somerville New Jersey 09976(US)

(74) Representative: Skone James, Robert Edmund
GILL JENNINGS & EVERY 53-64 Chancery Lane
London WC2A 1HN(GB)

(54) **An improved active material and cathode for electrochemical cells.**

(57) The present invention includes improved cathode means for reversibly storing charge at a positive potential relative to a Hg/HgO reference for use in a rechargeable cell utilizing an aqueous electrolyte. The cathode means include an active material having a reversibly oxidizable cation species which releases electrons through successive oxidation reactions during charging. One embodiment provides means for releasing more than one electron per molecule of the active material to achieve a full state of charge. Another embodiment provides means for decreasing the operating potential of the reactions oxidizing the active material for a given state of charge. The active material includes a reversibly oxidizable cation species and an electropositive metal element selected from a group consisting of lithium, sodium, potassium, magnesium, and calcium. The electropositive metal element is intercalated in the active material. These intercalated active materials are used to fabricate electrodes, cells, and batteries. Methods of preparing the intercalated active material and using a cathode including the active material are contemplated.

EP 0 165 723 A2

./...

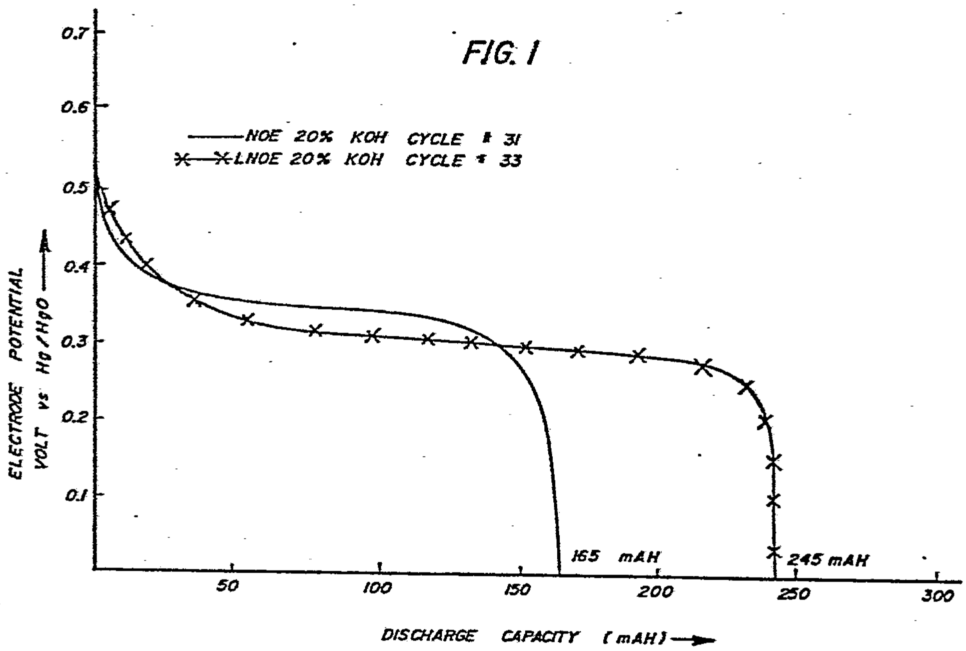
FIG. 1
NOE 20% KOH CYCLE # 31
LNOE 20% KOH CYCLE # 33
ELECTRODE POTENTIAL
VOLT vs Hg/HgO
0.7
0.6
0.5
0.4
0.3
0.2
0.1
165 mAH
245 mAH
50
100
150
200
250
300
DISCHARGE CAPACITY (mAH)

AN IMPROVED ACTIVE MATERIAL AND CATHODE FOR ELECTROCHEMICAL CELLS

The present invention is directed generally to an improved active material and cathode for use in a rechargeable electrochemical cell. More particularly, the cathode includes an active material having intercalated electropositive metal elements such as lithium.

It is commonly known that rechargeable alkaline battery systems have many advantages which include long cycle life, high charge and discharge rates, and favorable discharge characteristics at low temperatures. By virtue of these advantages, the rechargeable alkaline battery has been finding increasing applications in many fields of industry. These advantages are derived from the fact that the plaque commonly used as the active material support has a high porosity as well as a small thickness. The active material can be filled in a laminary developed state in the surface of the nickel plaque which has a large surface area. Thus, the electrode has a low ohmic resistance and a small degree of polarization.

One of the problems that face battery manufacturers is to improve the electrochemical performance of the battery to meet the demands of an increasingly varied number of applications. The criteria considered in developing these batteries demand that the specific energy and power and their volumetric counterparts, energy and power density, be sufficiently great in small cells to withstand the inevitable discounts resulting from scale-up, packaging for safety, etc. The calendar and cycle life also must be adequate. Material cost must be in accord with use markets. Safety and environmental hazards must be kept at a minimum.

Although this application focuses upon one of the most widely used rechargeable alkaline battery systems, namely the nickel-cadmium cell, the present invention improves the performance of positive electrodes which

utilize a reversibly oxidizable cation species in other rechargeable systems as well. Furthermore, the present invention finds application to cells utilizing various types of negative electrodes, electrolytes, and negative electrode charge storage mechanisms such as a hydrogen storage electrode.

In a conventional nickel-cadmium cell, the positive electrode consists of a porous nickel plaque impregnated by chemical or electrochemical methods with active material (cobalt-activated nickel hydroxide). Plaque density can be reduced to increase specific energy and lower cost, but only at the expense of reducing cycle life. A significant limitation on the energy and power density of such a cell lies in the chemical reactions present at the cathode, namely the nickel hydroxide electrode. While the first level of oxidation represented by Equation 1:

$$(1) \quad OH^- + Ni(OH)_2 \rightarrow NiOOH + H_2O + e^-$$

is easily achieved and forms the basis for the generally accepted theoretical electrode capacity of 289 mAH/g of nickel hydroxide, the second level of oxidation represented by Equation 2:

$$(2) \quad OH^- + NiOOH \rightarrow NiO_2 + H_2O + e^-$$

occurs at a potential which is more positive than the reaction present in the electrolyte of the cell represented by Equation 3:

$$(3) \quad 2OH^- \rightarrow H_2O + 1/2\ O_2 + 2e^-.$$

The first equation is in the potential range of about 0.34 to 0.44 volts versus a Hg/HgO reference electrode in the same solution. The second equation is in the potential range of about 0.45 to 0.65 volts according to the type of electrode and the current load. The reaction present in the electrolyte tends to dominate at most reasonable current densities and limit the electrode capacity. The result is an irreversible dissociation of the electrolyte and the

formation of gas. Thus, the second level of cathode oxidation represented by Equation 2 is not generally available for charge storage so the cathode capacity is limited to storing one electron per molecule of active material as expressed by Equation 1.

There have been several attempts at improving electrochemical performance of the nickel hydroxide electrode by using electrolytes which contain lithium hydroxide to promote an exchange reaction between the lithium ion and protons in the crystal lattice of the nickel hydroxide electrode. This was reported in "The Review of the Structure and the Electrochemistry of Nickel Hydroxide and Oxy-Hydroxide" P. Oliva et al., Journal of Power Sources 8 (1982) page 229-255. The exchange reaction, disclosed therein is not the same intercalation contemplated by the present invention. Furthermore, the alkaline electrolyte containing lithium as an additive was used with extreme caution since, depending on experimental conditions, it could poison the operation of the nickel hydroxide electrode. With increasing concentrations of lithium in the electrolyte, lithium nickelate was formed which displays a low discharge potential and exhibits poor reversibility especially at low temperatures.

Attempts at improving the electrochemical performance of cathode materials in non-alkaline battery systems have included intercalation. In particular, lithium intercalation is known as the discharge reaction in solid cathodes used as positive electrodes of certain rechargeable non-aqueous lithium battery systems such as $Li/TiS_2$ as presented in the article "Titanium Disulfide as a Cathode Material in Lithium Batteries-A Review" by E.J. Fraser et al., Journal of Power Sources 6 (1981) page 307. Occasionally, co-intercalation of immobile species, e.g. transition metals, is used to promote the reversibility of the lithium storage

in such transition metal sulfides. While such co-intercalation can have the effect of improving the reversibility of the charge storage process in the electrodes, a concomitant loss of capacity is expected and observed due to the competition of the two intercalating species, i.e. lithium and titanium, for a fixed number of available sites.

In accordance with the present invention, the electrochemical performance of conventional nickel hydroxide electrodes and other positive electrodes is improved by releasing more than one electron per molecule of active material to achieve a full state of charge and by decreasing the operating potential of the electrode oxidation reactions for a given state of charge. The present invention intercalates active material with electropositive metal elements such as lithium, sodium, potassium, calcium, or magnesium. These intercalated active materials are used to fabricate electrodes, cells, and batteries which exhibit increased discharge capacity which is reproducible over the cycle life and display a minimal loss of running voltage when compared to conventional nickel hydroxide electrodes. The energy requirement and evolution of heat during continuous overcharge of a cell also would be dramatically reduced. Furthermore, an improvement in charge retention time for cells and batteries utilizing the present invention can be expected.

The present invention includes improved cathode means for reversibly storing charge at a positive potential relative to a Hg/HgO reference for use in a rechargeable cell utilizing an aqueous electrolyte. The cathode means include an active material having a reversibly oxidizable cation species which releases electrons through successive oxidation reactions during charging. One embodiment provides means for releasing more than one electron per molecule of the active material to achieve a full state of charge.

Another embodiment provides means for decreasing the operating potential of the reactions oxidizing the active material for a given state of charge. The problems with prior art attempts at improving the performance of electrochemical cells discussed above are obviated by the present invention resulting in superior electrochemical performance.

The present invention also provides an active material for a positive electrode to reversibly store charge at a positive potential relative to a Hg/HgO reference for use in an electrochemical cell containing an aqueous electrolyte. The active material includes a reversibly oxidizable cation species and an electropositive metal element selected from a group consisting of lithium, sodium, potassium, magnesium, and calcium. The electropositive metal element is intercalated in the active material. Preferably lithium is used when nickel hydroxide or cobalt-activated nickel hydroxide is the active material impregnating a porous nickel plaque and the aqueous electrolyte is alkaline.

The present invention also provides for an electrochemical cell including at least one anode means for reversibly storing charge at a negative potential relative to a Hg/HgO reference. The cell also includes at least one cathode means for reversibly storing charge at a positive potential relative to a Hg/HgO reference. The cathode means are positioned in the cell and spaced in operative contact with the anode means. The cathode means include an aqueous electrolyte and an active material. The active material includes a reversibly oxidizable cation species and an electropositive metal element selected from a group consisting of lithium, sodium, potassium, magnesium, and calcium. The electropositive metal element is intercalated in the active material. The cell also includes a casing having anode means and cathode means positioned therein.

An active material for electrodes used in an electrochemical cell containing an aqueous electrolyte is provided by the present invention. One molecule of active material has a formula: $M_x H_y(Ni,Co)O_{(2+z)}$, whereas $M = Li, Na, K, Ca, \text{ or } Mg$; $0.01 \le x \le 0.3$; $0 \le y \le 4$; $0 \le z \le {}^y/_2$.

Several methods of using a cathode in an electrochemical cell containing an electrolyte are provided herein. The methods include providing an active material having a reversibly oxidizable cation species which releases electrons through successive oxidation reactions. One embodiment releases more than one electron per molecule of the active material to achieve the full state of charge. Another embodiment decreases the operating potential of the reactions oxidizing the active material for a given state of charge.

A method of making an active material for an electrode used in the electrochemical cell containing an electrolyte is also provided. The method includes providing an active material having a reversibly oxidizable cation species and intercalating an electropositive metal element selected from a group consisting of lithium, sodium, potassium, calcium, or magnesium into the active material. One embodiment chemically intercalates the metal element by contacting the active material with a fluid containing the electropositive metal element. A second embodiment electrochemically intercalates the metal element by exposing the electrode to be intercalated to ions of the electropositive metal element and supplying electrons to the active material so that the electrons are absorbed by the active material concomitant with introduction of the electropositive metal ions.

Several methods of using a cathode in a rechargeable electrochemical cell having an aqueous electrolyte are contemplated by the invention. The methods include providing an active material having a reversibly oxidizable cation

species which releases electrons through successive oxidation reactions. One embodiment releases more than one electron per molecule of the active material to achieve a full state of charge. A second embodiment decreases the operating potential of the reactions oxidizing the active material for a given state of charge. Preferably, the cathode utilizes an active material of the type described herein.

Accordingly, a first object of the invention is to provide cathode means for reversibly restoring charge at a positive potential relative to an Hg/HgO reference for us in a rechargeable cell utilizing an aqueous electrolyte. The cathode means are characterized by an active material having a reversibly oxidizable cation species which releases electrons through successive oxidation reactions. One embodiment provides means for releasing more than one electron per molecule of the active material to achieve the full state of charge. Another embodiment provides means for decreasing the operating potential of the reactions oxidizing the active material for a given state of charge.

A second object of the invention is to provide an active material for a positive electrode which reversibly stores charge at a positive potential relative to a Hg/HgO reference for use in a rechargeable electrochemical cell containing an aqueous electrolyte. The active material is characterized by a reversibly oxidizable cation species and an electropositive metal element selected from the group consisting of lithium, sodium, potassium, magnesium and calcium. The electropositive metal element is intercalated in the active material.

A third object of the invention is to provide a method of making an active material for an electrode used in an electrochemical cell containing an aqueous electrolyte. The method is characterized by the steps of providing an

active material having a reversibly oxidizable cation species and intercalating an electropositive metal element selected from a group consisting of lithium, sodium, potassium, calcium, and magnesium into the active material.

The preferred embodiment of this invention will not be described by way of example, which reference to the drawings accompanying this specification in which:

Figure 1 is a graph of electrode potential during discharge in volts (versus Hg/HgO) versus discharge capacity comparing cells having a lithiated nickel hydroxide electrode of the invention to a conventional nickel hydroxide electrode;

Figure 2 is a graph of electrode potential during discharge in volts (versus Hg/HgO) versus the discharge capacity comparing cells having a lithiated nickel hydroxide electrode of the invention to a conventional nickel hydroxide electrode;

Figure 3 is a graph of electrode potential during discharge in volts (versus Hg/HgO) versus discharge capacity of a lithiated nickel hydroxide electrode of the invention in an electrolyte mixture different from Figures 1 and 2; and

Figure 4 is a graph of specific capacity versus cycle number comparing lithiated nickel hydroxide electrodes of the invention to conventional nickel hydroxide electrodes.

The present invention improves the performance of electrochemical cells by utilizing more than one electron per molecule of the active material as the charge (electron) transfer mechanism through a decrease in the operating potential of successive reactions oxidizing the active material. This is accomplished by intercalating electropositive metal elements such as lithium into the active material. It is believed that the intercalation of a pre-determined amount of an electropositive metal element may lower the electrode's operating potential sufficiently so that the

electrode accepts more coulombs during charging before its potential value rises to the oxygen evolution potential value. Even though the oxygen evolution potential for the electrode also may be lowered, the electrode is found to accept more coulombs during charging before reaching the oxygen evolution potential. For example, a substantial portion of the nickel in a nickel hydroxide electrode increases from the +2 to the +4 valence state upon charging prior to domination by the oxygen evolution reaction.

Reviewing the oxidation reactions for the nickel hydroxide electrode in terms of intercalation chemistry reveals the roles of protons as mobile species in the charging and discharging reactions. Of course, in alkaline electrolyte the formation of water is favored.

(1a) $H_2NiO_2 \rightarrow HNiO_2 + H^+ + e^-$

(2a) $HNiO_2 \rightarrow NiO_2 + H^+ + e^-$

The lithiation of the electrode yields Equation 4:

(4) $H_2NiO_2 + yLi \rightarrow Li_yH_2NiO_2$

Initial exposure of such a lithiated electrode to an aqueous electrolyte may tend to irreversibly oxidize the lithiated electrode and to remove a portion of the intercalar lithium yielding Equation 5:

(5) $Li_yH_2NiO_2 + zH_2O \rightarrow zLiOH + Li_{(y-z)}H_2NiO_2 + z/2H_2$

During the subsequent forming step (i.e. the initial charging process) a further irreversible oxidation of the lithiated electrode and removal of more intercalar lithium may occur as in Equation 6:

(6) $Li_{y-z}H_2NiO_2 + vOH^- \rightarrow vLiOH + Li_{(y-z-v)}H_2NiO_2 + ve^-$

where v represents the degree of irreversible oxidation during forming. If x= y - z - v we can express the two step reversible electrode oxidation, i.e. charge step, as Equations 7 and 8:

(7) $Li_xH_2NiO_2 \rightarrow Li_xHNiO_2 + H^+ + e^-$

(8) $Li_xHNiO_2 \rightarrow Li_xNiO_2 + H^+ + e^-$

The discharge reactions would be in reverse of Equations 7 and 8.

The cathode means of the present invention provides an active material containing a reversibly oxidizable cation species which releases electrons through successive oxidation reactions. Several embodiments and variations of those embodiments are based upon the charge transfer mechanism discussed herein. One embodiment provides means for releasing more than one electron per molecule of the active material to achieve a full state of charge.

A second embodiment provides means for decreasing the operating potential of the reactions oxidizing the active material for a given state of charge. Preferably, the charging potential of the oxidation reactions is lowered to at least the potential of the reaction dissociating the electrolyte to form a gas, i.e. during overcharging of the cell. The electrolyte also may include an electrochemically active species such as an hydroxide ion. In addition to increasing electrode capacity, a lower electrode potential delays or prevents reduction of the charged active species resulting in an improvement of the charge retention time for a given state of charge.

The present invention contemplates using active materials which have a layered, a chain-like, or a disordered structure created in one dimension or two dimensions by structurally ordered units. The layered structure of an active material like nickel hydroxide allows inclusion of atomic and molecular species in the spaces within or between the basic units. This phenomenon is known as intercalation. The intercalation of these active materials is a topochemical reaction that is characterized by retention of the structurally ordered units and lack of phase

separation. Intercalation may cause lattice expansion or swelling. Intercalation is not an ion exchange reaction but an insertion reaction in which the atom or molecular species is inserted within or between the structurally ordered units whose composition remains fixed.

The active material also contains a reversibly oxidizable cation species. For example, the cation $Ni^{+2}$ in a nickel hydroxide or cobalt-activated nickel hydroxide active material and the cation $Bi^{+3}$ in a bismuth oxide active material is the reversibly oxidizable cation species.

The criteria for selecting metal elements suitable for performing the function described herein rely upon their being strongly electropositive. After intercalation and electrode formation, a portion of the metal element must remain essentially insoluable in the electrolyte. In addition, the less mobile the electropositive metal atom is in the active material structure the more preferred. The electropositive metal element must have sufficient mobility, however, to intercalate into the active material. Suitable electropositive metal elements include calcium, magnesium, and preferably lithium. Mixtures of these electropositive metal elements also are suitable for intercalation.

It is important that a minimal amount of the electropositive metal element be intercalated for the electrode to exhibit a significant improvement in discharge capacity. For example, if lithium is the intercalating metal in a nickel hydroxide electrode, at least about 0.4 weight percent of the lithium is intercalated. Preferably, 0.5 to 1.0 weight percent is intercalated. More of the lithium may be intercalated, but significantly less improvement results.

It also is important that a minimal amount of the electropositive metal element remain intercalated after electrode formation by initial charging for a

meaningful improvement in electrochemical performance to result. For example, at least about 0.1 weight percent of lithium remains intercalated after electrode formation. Preferably, 0.1 to 0.3 weight percent remains intercalated. For other metal elements, it is more convenient to express the amount of intercalar metal in atomic percent. On this basis, at least 0.5 atomic percent, and preferably, one atomic percent of the metal element remains intercalated after electrode formation.

More specifically, one molecule of an active material contemplated by the present invention may be represented by the formula:

$M_xH_y(Ni,Co)O_{(2+z)}$, whereas M=Li,Na,K,Ca, or Mg; $0.01 \leq x \leq 0.3$; $0 \leq y \leq 4$; $0 \leq z \leq {}^{y}/_{2}$.

A variety of negative electrodes or anodes may be used in conjunction with the invention. Commonly used anode materials are cadmium, iron, zinc, activated carbon, and hydrogen evolution catalysts such as the negative electrode of a conventional nickel hydrogen cell. The invention, however, is not as limited. Other aqueous battery systems which use a different storage mechanism also may be used. In particular, hydrogen storage materials used as the negative electrode in conjunction with the invention exhibit the same significant improvement in cell performance.

The invention also has proved to be very flexible in the types of suitable electrolytes. Preferably, an alkaline electrolyte (a pH greater than seven) such as pure 5.5M KOH or a mixture of 5.5M KOH and 1M LiOH is used. Other concentrations and mixtures of these electrolytes also yield a significant improvement when used with the invention.

The present invention also contemplates an electrochemical cell which includes at least one anode

means for reversibly storing charge at a negative potential relative to a Hg/HgO reference. At least one cathode means also are included for reversibly storing charge at a positive potential relative to a Hg/HgO reference. The cathode means are positioned in the cell and spaced in operative contact with the anode means. The cathode means include an electrolyte and an active material of the structure and composition previously discussed herein. The cell also includes a casing with the anode means and the cathode means positioned therein. A plurality of these cells may be assembled to produce a battery.

Several methods of making the active material are contemplated which include the step of providing an active material of the type discussed herein. Subsequently, the active material is intercalated with an electropositive metal element. The electropositive metal element may be selected from a group consisting of lithium, sodium, potassium, calcium, and magnesium. The intercalation may be performed by at least two different processes, chemically or electrochemically.

The chemical intercalation process contacts the active material with a fluid containing the electropositive metal element. The fluid may be either a non-aqueous solution or a gas.

A preferred solution for performing the intercalation of lithium is n-butyl lithium in hexane. Lithium may also be dissolved in a solvent such as ammonia or hexanethylphosphoric triamide. Sodium, potassium, calcium, and magnesium may be suitably dissolved as for example in ammonia.

Alternatively, the intercalation may be performed electrochemically. In general, methods of the invention expose the electrode to be intercalated to ions of the electropositive metal element and supply electrons to the active material so that the electrons are absorbed by the

active material concomitant with introduction of the electropositive metal ions. For example, electrochemical intercalation is performed by the discharge of electrodes in a cell which includes a lithium or a lithium alloy anode, a lithium ion containing electrolyte, and the electrode to be intercalated. This electrode is provided with an electrical contact to supply electrons which counterbalance and neutralize the flow of lithium ions into the electrode. Electrochemical intercalation may be similarly performed with sodium, calcium, potassium, and magnesium.

The intercalation step also may include removing excess surface deposits of the electropositive metal element. A solvent such as hexane or dioxalane in the case of lithium is suitable. Additionally, a predetermined amount of the compound containing the metal element can be prepared in the solution to control the amount of the metal element to be intercalated.

When electrochemically prepared nickel hydroxide electrodes are used, it is desirable to dehydrate the active material before the intercalation step. Any suitable means accomplishing dehydration without degradation of the active material may be used. For example, electrochemically prepared nickel hydroxide may be heated in the range of 160 to 210°C for this purpose.

Several methods of using a cathode in rechargeable electrochemical cell having an aqueous electrolyte are contemplated by the invention. The methods include providing an active material having a reversibly oxidizable cation species which releases electrons through successive oxidation reactions. One embodiment releases more than one electron per molecule of the active material to achieve a full state of charge. A second embodiment decreases the operating potential of the reactions oxidizing the active material

for a given state of charge. Preferably, the cathode utilizes an active material of the type described herein.

EXAMPLE 1

A first batch of three nickel hydroxide electrodes (NOE) made by the Alliance Tool Company was used for modification according to the present invention. These electrodes were prepared by a conventional process chemically precipitating nickel hydroxide in the pores of a sintered nickel plaque. The electrodes were immersed in an intercalating solution of 40 cc of n-butyl lithium in hexane (99.9% pure) from Foote Mineral Corporation having a concentration of 1.6 M for about 16 hours. An argon filled glove box provided an inert environment over the immersed electrodes. After the electrodes were kept in the intercalating solution, excess surface deposits of lithium were removed by dipping the electrodes into a dioxalane or hexane solvent. The electrodes were allowed to dry by evaporation in the argon filled glove box. The lithiated nickel hydroxide electrodes (LNOEs) were approximately 1 inch by 1 1/4 inch by 0.027 inch in size and the total weight of an electrode was about 2.06g (0.86g active material).

An analysis of amount of lithium and nickel present in the LNOEs was performed by atomic absorption. The average amount of lithium present was about 0.9 weight percent and the average amount of nickel was about 72 weight percent prior to electrode formation by initial cycling.

These LNOEs were tested in flooded half-cell configuration using carbon (dummy) counter electrodes which evolve hydrogen while charging the positive electrode and evolve oxygen while discharging the positive electrode. The electrolyte used in the cell was 20% KOH. The initial

electrode potential was -0.98 volts versus Hg/HgO. To bring the electrode potential to a positive value (0.48 volts), the electrode was charged at 2 mA and 11 mA so that the total charge was 164 mAH. During the initial charging process, the electrode potential increased gradually, and then changed suddenly from -0.51 volts to +0.48 volts within a few seconds. The electrodes were then cycled and their electrochemical performance is illustrated by the data in Table I below. For comparison, a batch of conventional nickel hydroxide electrodes were prepared and tested under identical conditions except where otherwise noted. Both the NOE and LNOE were charged to 420 mAH at rates between 30 to 100mA during cycling. The mid-discharge voltage (versus Hg/HgO) for the NOE and LNOE was 0.34 and 0.31 volts, respectively. Figure 1 additionally illustrates the significant improvement of the present invention with a voltage versus discharge capacity plot of the NOE at cycle 31 and the LNOE at cycle 33. The discharge current was 200 mA.

As demonstrated by these comparative tests, the oxygen evolution potential for the LNOE of the present invention is lower than the conventional nickel hydroxide electrode by approximately 25 mv versus Hg/HgO. Second, the discharge potential of the present invention at the midpoint of the discharge curve is lower than the conventional nickel hydroxide electrode by approximately 25 mv versus Hg/HgO. These data indicate that the charge retention time of a cell or battery would be improved using the invention. The energy requirement and heat evolved by such a cell on continuous overcharge also would be significantly reduced. The discharge capacity is at least approximately 45% higher than that of the conventional nickel hydroxide electrode. These results for the present invention were reproducible for at least 75 cycles when the tests were arbitrarily terminated.

TABLE I

| NOE | | | LNOE | | |
|---|---|---|---|---|---|
| Cycle | Dischg Current (mA) | Dischg Capacity (mAH) | Cycle | Dischg Current (mA) | Dischg Capacity (mAH) |
| 4 | 30 | 170 | 5 | 30 | 262 |
| 5 | 100 | 170 | 7 | 100 | 240 |
| 18 | 200 | 180 | 25 | 200 | 240 |
| 30 | 200 | 150 | 29 | 200 | 240 |
| 50 | 200 | 150 | 57 | 100 | 240 |

EXAMPLE 2

Several batches of three electrodes each were prepared in a procedure similar to that of Example 1 except that the electrodes were rinsed with a solvent of n-hexane. Replicate analysis indicated an amount of lithium of 0.63, 0.89, and 0.99 weight percent prior to electrode formation. An analysis of one of these electrodes after formation indicated a amount of lithium 0.25 weight percent.

One of these electrodes were used to construct cells using conventional negative electrodes of cadmium whose capacity greatly exceeded that of the positive electrode being tested (positive electrode limited). An electrolyte of 5.5 M KOH was used. The initial electrode potential was -0.85 volts (versus Hg/HgO). A reference cell using a conventional NOE was used for comparison. The LNOE and NOE were then cycled and their electrochemical performance illustrated by the data in Table II below. Both the NOE and LNOE were overcharged to 420 mAH. The mid-discharge voltage versus Hg/HgO for the NOE and LNOE was .39 and .335 volts, respectively. The average capacity

for the NOE and LNOE was 210 mAH/g and 309 mAH/g respectively. Figure 2 illustrates the capacity on discharge at 30 mA for NOE and LNOE during the tenth cycle. Again, the discharge capacity of the inventive LNOE was higher than that of the conventional NOE. The test of this electrode was terminated arbitrarily after 50 cycles.

TABLE II

| NOE/5.5 M KOH | | | LNOE/5.5 M KOH | | |
|---|---|---|---|---|---|
| Cycle | Discharge Current (mA) | Discharge Capacity (mAH) | Cycle | Discharge Current (mA) | Discharge Capacity (mAH) |
| 1-9 | 30 | 195 | 1 | 30 | 270 |
| 10 | 30 | 180 | 8 | 30 | 265 |
| 18 | 100 | 170 | 20 | 30 | 265 |
| 20 | 100 | 165 | 30 | 100 | 240 |
| 30 | 30 | 185 | 35 | 200 | 230 |
| | | | 50 | 30 | 260 |

EXAMPLE 3

Another batch of three electrodes was prepared in a procedure similar to that of Example 2. One of the electrodes from the batch was used to construct a cell as indicated in Example 2. The electrolyte, however, was changed to 5.5 M KOH + 1 M LiOH to determine the effect of adding lithium hydroxide to the electrode. This LNOE was cycled and its electrochemical performance is illustrated by the data in Table III below. The LNOE was overcharged to 420 mAH. The mid-discharge voltage versus Hg/HgO for the LNOE was 0.41 volt. The average capacity for the LNOE was 331 mAH/g.

Figure 3 illustrates the capacity on discharge at 30 mA on the seventeenth cycle for the LNOE. The discharge capacity of the inventive LNOE was again greatly improved. The test of this LNOE went at least 65 cycles before being terminated arbitrarily.

TABLE III

LNOE/5.5 KOH + 1 M LiOH

| Cycle | Discharge Current (mA) | Discharge Capacity (mAH) |
|---|---|---|
| 2 | 30 | 300 |
| 3 | 30 | 285 |
| 6-11 | 30 | 300 |
| 15 | 30 | 285 |
| 19-30 | 30 | 285 |
| 37-38 | 100 | 250 |
| 42-45 | 30 | 270 |
| 65 | 30 | 265 |

## EXAMPLE 4

Sets of three large electrodes were prepared in accordance with the procedures stated in Example 2. Except that the volume of the n-butyl lithium solution was increased to 140 ml. The size of the electrode was 6.2 inch by 1.3 inch by 0.027 inch. For comparison, an NOE of the same size was used. Cells were constructed in the manner of Example 2 using these larger electrodes. A 5.5 M KOH electrolyte was used. The cycling data for the LNOE are presented in Table IV below. Both the LNOE and NOE were overcharged to 3.4 AH. The cycling of the LNOE was terminated on the 20th cycle.

The average capacity for the LNOE was 2.7 AH. By comparison, the NOE had a discharge capacity of 1.5 to 1.6 AH. Analysis of a LNOE indicated about 1.25 weight percent of lithium before cycling and 0.19 weight percent after cycling regime was completed.

TABLE IV

LNOE/5.5 M KOH

| Cycle | Discharge Current (A) | Discharge Capacity (AH) |
|---|---|---|
| 1 | 0.200 | 2.25 |
| 6 | 0.2 | 2.52 |
| 7 | 0.2 | 2.70 |
| 9 | 0.2 | 2.96 |
| 10 | 0.2 | 2.88 |
| 12 | 0.275 | 2.90 |
| 14 | 0.360 | 2.65 |
| 16 | 0.400 | 2.80 |
| 18 | 0.400 | 2.75 |
| 20 | 0.400 | 2.80 |

EXAMPLE 5

Several batches of three electrodes were prepared in a procedure similar to that of Example 4, except that the n-butyl lithium solution was sealed in the reaction vessel during intercalation so that hexane solvent evaporation was inhibited. Four of these electrodes were used to construct cells similar to that in Example 4, except that the negative electrodes were dummy nickel metal electrodes. The electrolyte used in the cells was 30% KOH. Three conventional NOEs were used as

a reference. The LNOEs and NOEs were then cycled and their electrochemical performance is illustrated by the data in Figure 4. The input charge for the NOEs was 1.6 AH and for the LNOEs was 3.2 AH. The discharge was about 0.44 A for most cycles of both electrodes with the discharge potential cut off at 0.1 volt versus Hg/HgO.

As illustrated by the data, the average specific capacity showed an improvement of at least about 55% compared to the conventional NOEs. Cycling of the LNOEs continued at the time of filing this application. Even at the 150th cycle, the LNOEs showed no degradation.

These data demonstrate that the benefits of the present invention are reproducible during extended cycling.

EXAMPLE 6

Two lithium intercalated electrodes were prepared in a procedure similar to Example 5 except that electrochemically impregnated nickel hydroxide electrodes from Eagle Picher Corp. were used. These electrodes were not dehydrated. Cells were constructed using a state of the art hydrogen storage electrode made by the Ovonic Battery Company. The cells were wound into a jelly-roll type configuration and sealed. For comparison, an identical cell was prepared using a conventional NOE electrode except that the size of the NOE was 6.1 inches long as compared to a 5.4 inch length for the LNOE.

Upon cycling, the capacity of the inventive LNOE illustrated an improvement in capacity at the twelfth cycle over the conventional NOE as shown in Table V below. Analysis of a LNOE indicated 0.6 weight percent of lithium present before cycling and 0.03 weight percent after the cycling regime was completed.

TABLE V

| NOE | | | LNOE | | |
|---|---|---|---|---|---|
| Cycle | Charge(AH) Capacity | Discharge(AH) Capacity | Cycle | Charge(AH) Capacity | Discharge(AH) Capacity |
| 4 | 2.0 | 1.68 | 1 | 1.2 | .96 |
| 6 | 2.0 | 1.66 | 6 | 1.6 | 1.44 |
| 8 | 2.0 | 1.68 | 8 | 1.6 | 1.5 |
| 12 | 2.0 | 1.67 | 12 | 2.0 | 1.76 |

As illustrated by these examples, a number of advantages result from the use of the inventive active material and cathode. The intercalated electropositive metal element improved the capacity of a conventional cobalt-activated nickel hydroxide electrode by at least approximately 50%. A significant improvement resulted regardless of the type or concentration of the electrolyte. In addition, different types of anode materials e.g. activated carbon, cadmium, zinc, iron, or hydrogen storage material may be used with the present invention while exhibiting similar significant increase in capacity. Irrespective of the size of the electrode, the discharge rate, the sealed, flooded or starved electrolyte condition, the improvement is always significant.

It is believed from the data that the potential of the oxidation reactions for the active material in the cathode have been lowered. Even the open circuit voltage at a given state of charge is reduced by the present invention. The data indicate that the energy requirement and heat evolution from a cell on continuous overcharge which used the invention would be dramatically reduced. Additionally, the charge retention time of a cell or battery would be increased. All of the above factors improve electrochemical performance of an electrode utilizing the present invention.

0165723

Modifications and variations of the present invention are possible in light of the above teachings. It is, therefore, to be understood that within the scope of the appended claims the invention may be practiced otherwise than is specifically described.

CLAIMS

1. Improved cathode means for reversibly storing charge at a positive potential relative to a Hg/HgO reference for use in a rechargeable cell utilizing an aqueous electrolyte, said cathode means characterized by:

an active material having a reversibly oxidizable cation species which releases electrons through successive oxidation reactions; and

means for releasing more than one electron per molecule of said active material to achieve the full state of charge.

2. Improved cathode means according to claim 1, further characterized by said active material being selected from a group consisting of nickel hydroxide, cobalt-activated nickel hydroxide, and bismuth oxide.

3. Improved cathode means according to claim 1, further characterized by said cation species being selected from the group consisting of $Ni^{+2}$ and $Bi^{+3}$.

4. Improved cathode means according to claim 1, further characterized by said active material including an electropositive metal element selected from the group consisting of lithium, sodium, potassium, magnesium, and calcium, said electropositive metal element being intercalated in said active material.

5. Improved cathode means for reversibly storing charge at a positive potential relative to a Hg/HgO reference for use in a rechargeable cell utilizing an aqueous electrolyte, said cathode means characterized by:

an active material having a reversibly oxidizable cation species which releases electrons through successive oxidation reactions; and

means for decreasing the operating potential of said reactions oxidizing said active material for a given state of charge.

6. Improved cathode means according to claim 5, further characterized by said active material being selected from a group consisting of nickel hydroxide, cobalt-activated nickel hydroxide, or bismuth oxide.

7. Improved cathode means according to claim 5, further characterized by said cation species being selected from a group consisting of $Ni^{+2}$ and $Bi^{+3}$.

8. Improved cathode means according to claim 5, further characterized by said active material including an electropositive metal element selected from the group consisting of lithium, sodium, potassium, magnesium, and calcium, said element being intercalated in said material.

9. Improved cathode means according to claim 8, further characterized by said electropositive metal element being present in an amount greater than about 0.1 and less than about 0.3 weight percent.

10. An active material for a positive electrode which reversibly stores charge at a positive potential relative to a Hg/HgO reference for use in a rechargeable electrochemical cell containing an aqueous electrolyte, said active material characterized by a reversibly oxidizable cation species and an electropositive metal element selected from the group consisting of lithium, sodium, potassium, magnesium, and calcium, said electropositive metal element being intercalated in said active material.

11. A material according to claim 10, further characterized by said electropositive metal element being present in an amount greater than about 0.1 and less than about 0.3 weight percent.

12. A material according to claim 10, further characterized by said active material being selected from

a group consisting of nickel hydroxide, cobalt-activated nickel hydroxide, and bismuth oxide.

13. A material according to claim 10, further characterized by said cation species being selected from a group consisting of $Ni^{+2}$ and $Bi^{+3}$.

14. A positive electrode to reversibly store charge at a positive potential relative to a Hg/HgO reference for use in an electrochemical cell containing an aqueous electrolyte, said electrode characterized by an active material according to claim 10.

15. A method of making an active material for an electrode used in an electrochemical cell containing an aqueous electrolyte, said method characterized by the steps of:

providing an active material having a reversibly oxidizable cation species; and

intercalating an electropositive metal element selected from a group consisting of lithium, sodium, potassium, calcium, or magnesium into said active material.

16. A method according to claim 15, further characterized by said intercalating step including:

contacting said active material with a fluid containing said electropositive metal element.

17. A method according to claim 15, further characterized by said electropositive metal element of said intercalating step being lithium and said fluid of said contacting step being a lithium solvent selected from a group consisting of ammonia and hexanethylphosphoric triamide.

18. A method according to claim 15, further characterized by said intercalating step including:

exposing said active material to ions of said electropositive metal elements;

supplying electrons to said active material so that said electrons are absorbed by the active material concomitant with introduction of said electropositive metal ions.

19. A method according to claim 15, further characterized by said method including dehydrating said active material before said intercalating step.

20. A method according to claim 15, further characterized by said method including forming an electrode from said active material.

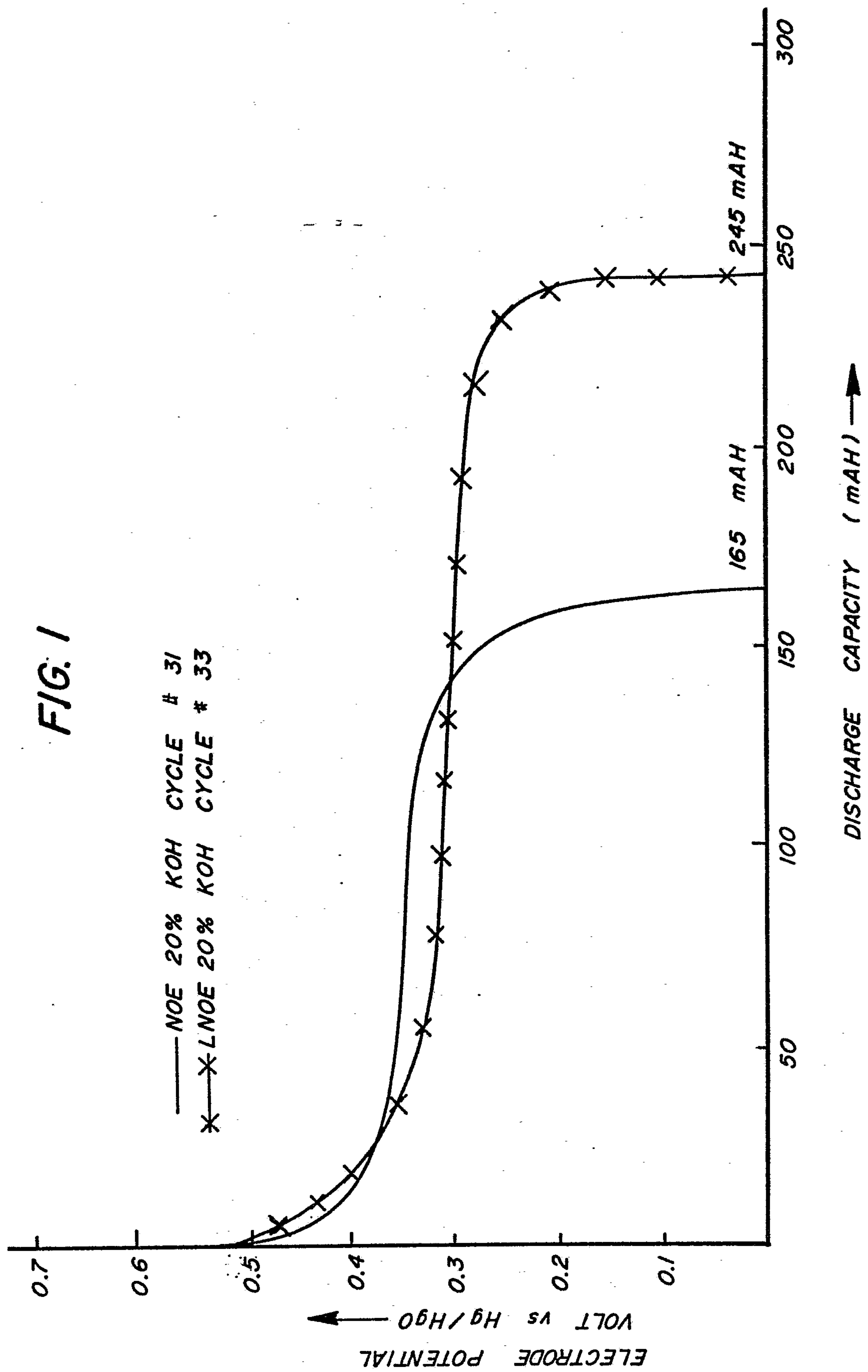
NOE 20% KOH CYCLE # 31
LNOE 20% KOH CYCLE # 33
165 mAH
245 mAH
DISCHARGE CAPACITY (mAH)
50
100
150
200
250
300
ELECTRODE POTENTIAL
VOLT vs Hg/HgO
0.1
0.2
0.3
0.4
0.5
0.6
0.7

FIG. 1

FIG. 2

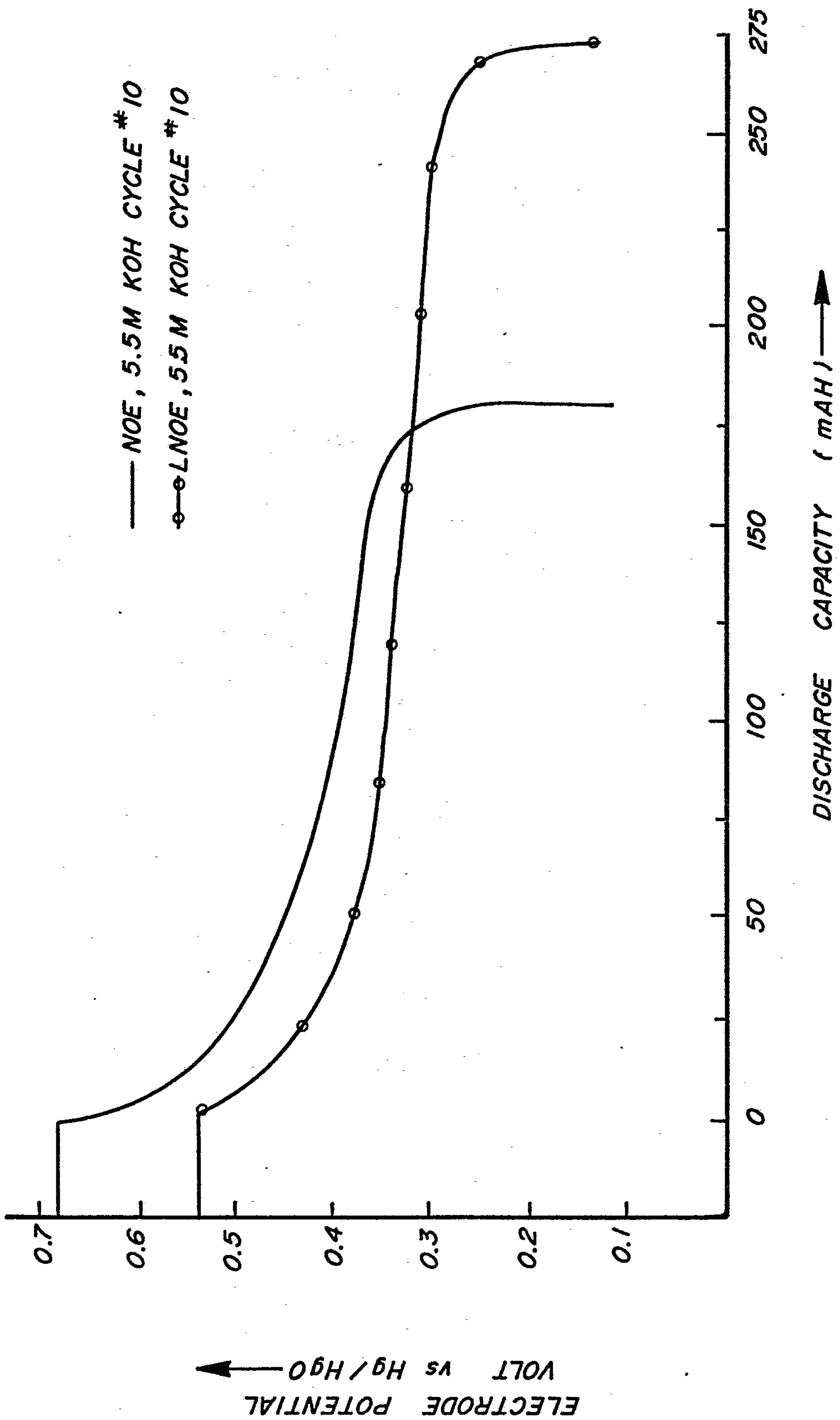
NOE, 5.5 M KOH CYCLE #10
LNOE, 5.5 M KOH CYCLE #10
0.7
0.6
0.5
0.4
0.3
0.2
0.1
0
50
100
150
200
250
275
DISCHARGE CAPACITY (mAH)
ELECTRODE POTENTIAL
VOLT vs Hg/HgO

FIG. 3

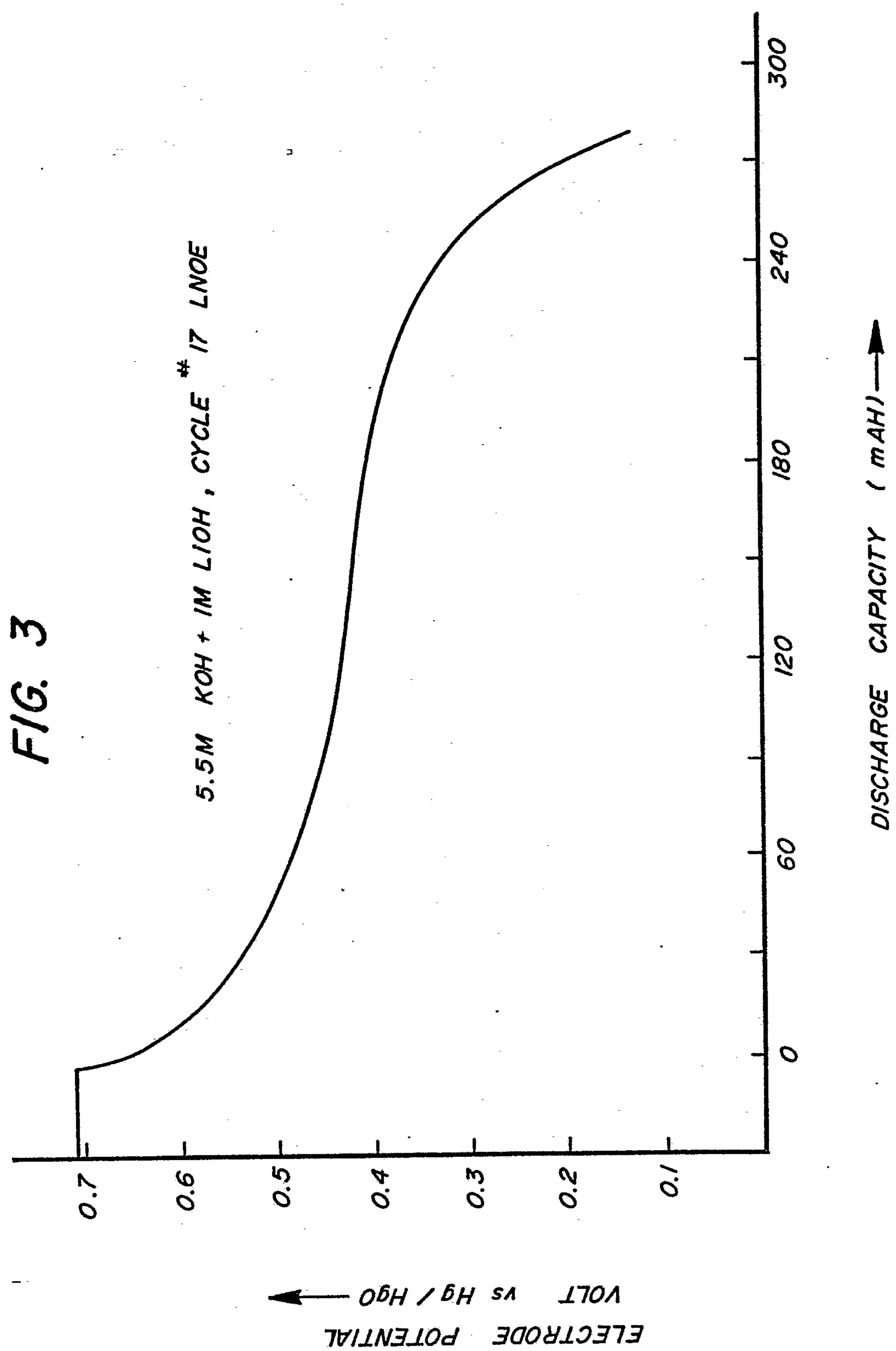
5.5M KOH + IM LIOH , CYCLE # 17 LNOE
0.7
0.6
0.5
0.4
0.3
0.2
0.1
0
60
120
180
240
300
ELECTRODE POTENTIAL
VOLT vs Hg / HgO
DISCHARGE CAPACITY ( mAH)

FIG. 4

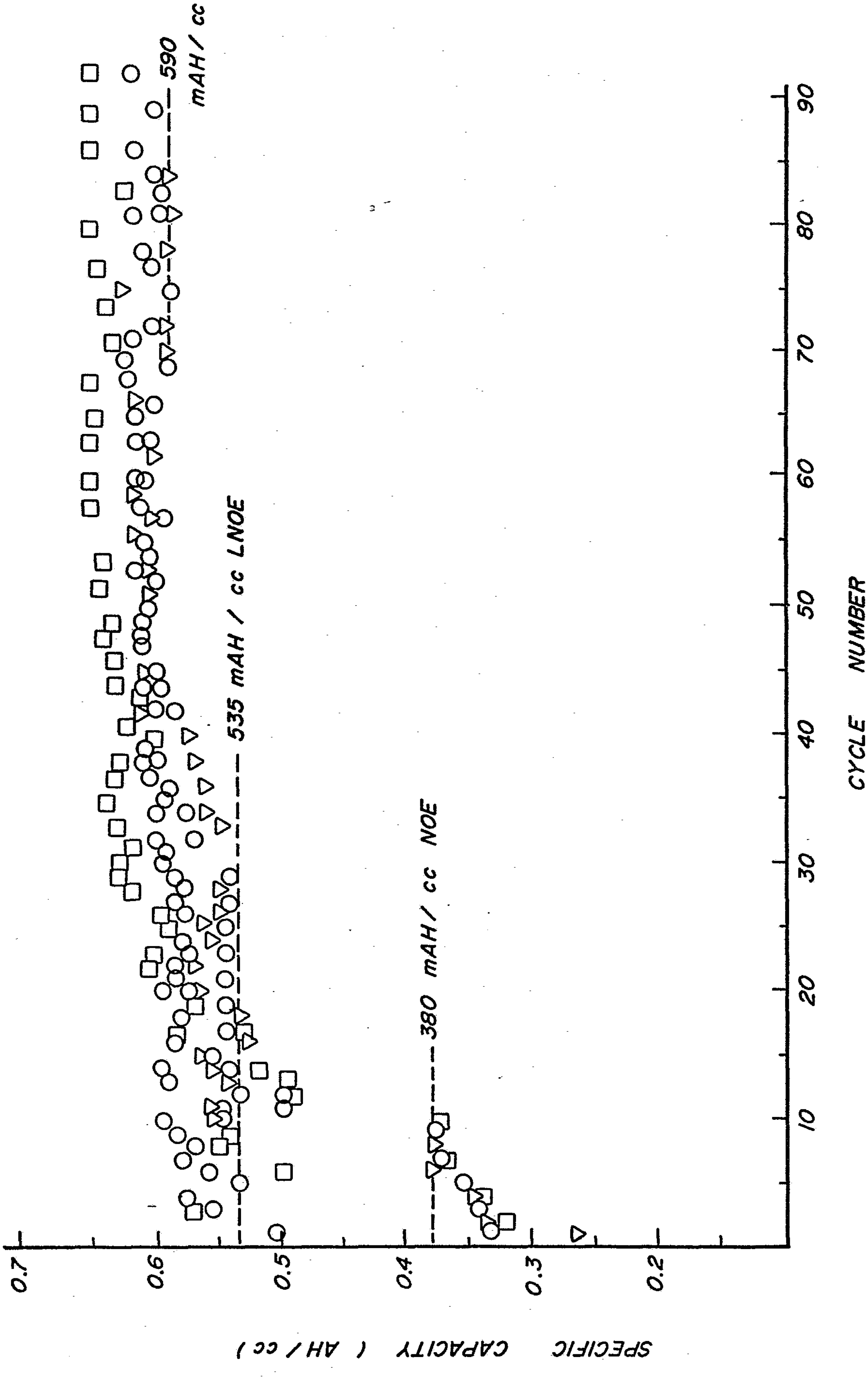
590 mAH / cc
535 mAH / cc LNOE
380 mAH / cc NOE
CYCLE NUMBER
10
20
30
40
50
60
70
80
90
SPECIFIC CAPACITY ( AH / cc )
0.7
0.6
0.5
0.4
0.3
0.2